# EUROPEAN PATENT APPLICATION

(11) **EP 1 719 606 A2**
(43) Date of publication of application: **08.11.2006**
(21) Application number: 06112958.1
(22) Date of filing: 24.04.2006
(51) Int. Cl.: B29C 65/20

(54) **Apparatus for welding ends of plastics pipes located on-site**

(30) Priority: 03.05.2005 IT PD20050124
(71) Applicant: RITMO S.p.A., 35037 Teolo (Padova) (IT)
(72) Inventor: Bortoli, Renzo, 35038 TORREGLIA PD (IT)
(74) Representative: Modiano, Micaela Nadia

(57) **Abstract**

An apparatus for welding ends of plastics pipes comprising a supporting frame (16, 116) for a first clamp (17) for locking the end of a first pipe (18) and for a second clamp (19, 119) for locking the end of a second pipe (20) to be welded to the first pipe (18); the second clamp (19, 119) movable toward the first clamp (17) with translational motion. A heat-generating element (33) for welding and a milling device (34) for the ends of the first and second pipes (18, 20) are associable with the welding apparatus (10, 100) provided with a control unit (36) and with reversible elements for fixing to a vehicle (11, 111) provided with an auxiliary hydraulic system (25). The reversible fixing elements (14) comprise hydraulic couplings (28) for connecting the auxiliary hydraulic system (25) to the hydraulic means (21) for the translational motion of the second clamp (19, 119) and to a hydraulic motor (26) which is connected to an electric generator (27) for supplying power to the welding apparatus (10, 100).

## Description

The present invention relates to an apparatus for welding ends of plastics pipes located on-site.

The present invention also relates to a motorized vehicle provided with such welding apparatus.

Different types of on-site welding apparatus for plastics pipes forming portions of long pipelines for pressurized fluids are known.

Typically, these welding apparatuses are constituted by a supporting frame for a first clamp for locking the end of a first pipe and for a second clamp for locking the end of a second pipe to be welded to the first pipe.

The second clamp can move toward the first clamp manually or automatically, in order to move the end of the second pipe toward the end of the first pipe during welding.

These apparatuses also comprise a heat-generating element for welding, which allows to melt the ends of the pipes to be welded, and a milling device for making the ends of such first and second pipes flat and parallel.

The system is managed by a control unit of the electronic or electrohydraulic type, typically provided with controls available to an operator.

An electric power source for the operation of the control unit, for heating the heat-generating element and for the operation of the milling device, as well as a hydraulic system for the operation of the hydraulic actuators which move the second clamp, are of course associated with the apparatus.

There are substantially two methods for working on pipes to be welded on-site.

In a first method, the welding apparatus is kept stationary and the welded pipe portions are transferred from the movable clamp to the fixed clamp, continuously arranging new pipes on the movable jaw.

This method accordingly entails the need for means such as cranes and roller beds for moving the welded pipes, which are ultimately particularly demanding; it is evident that as the total length of the pipeline formed by the pipes increases, the number of means needed to move it between the clamps likewise increases.

In a second method, the various pipes that constitute the pipeline are arranged along the intended path; accordingly, it is necessary to move the welding apparatus along the path of the pipeline.

This second operating method has the disadvantages of longer operating times, since it is necessary to move the apparatus and reposition it correctly.

In order to limit the drawbacks of this second method, one solution is to arrange the welding apparatus on a wheeled truck and to move such truck along the path of pipes.

A more refined solution, disclosed for example in US-5814182, in practice motorizes the truck and provides it with tracks for its movement.

Such motorized truck is substantially autonomous, since it is provided with means adapted for the movement of said truck, with the means for moving the second clamp, with the power source for operating the control unit of the welding apparatus, the heat-generating element and the milling device.

This motorized truck has a fixed arrangement of the welding apparatus, so that the second clamps can move substantially along the direction of the longitudinal axis of the truck, to which the tracks are parallel.

The truck is driven externally with respect to said truck by means of controls available to the user, who substantially stands and walks alongside the truck.

This solution in any case suffers substantial drawbacks in terms of being able to work conveniently along pipelines formed by welded pipes.

The advantage of moving conveniently the welding apparatus is in fact limited by the fact that the movement speed related to a track system is rather low.

Further, the operator must follow on foot the welding apparatus in its movement, and this in certain cases can be tiring due to the terrain of the site or even dangerous due to the presence of holes, soft soil or due to the presence in the soil of hidden objects or tools which can cause injuries.

Moreover, the welding apparatus is arranged rigidly on the motorized truck; it is therefore very awkward to have to position correctly the welding apparatus along the pipelines: the terrain is very often not horizontal and therefore there can be problems in locking the pipe which is already welded to the pipeline; by being inclined with respect to the welding apparatus because the terrain is not level, once such pipe is locked to the clamps, it transmits the flexing action to the elements of the apparatus, producing friction and possible problems thereon.

Moreover, the track-type movement system allows very limited lateral movements, causing inconvenience during the alignment and loading of the pipes.

Due to the shape of the machine formed by the truck and by the welding apparatus, the welding operations are performed at a certain height from the ground, thus forcing the use of roller beds in order to lift the ends of the pipes to be welded.

The aim of the present invention is to provide an apparatus for welding the ends of plastics pipes located on-site which solves the drawbacks described in known types.

Within this aim, an object of the present invention is to provide an apparatus for welding the ends of plastics pipes located on-site which can be moved conveniently and quickly along the path of the pipeline formed by the pipes to be welded, in full safety for the operator assigned to its operation.

Another obj ect of the present invention is to provide an apparatus for welding the ends of plastics pipes located on-site which can be placed conveniently and precisely in the welding positions, at the same time limiting the flexural effects imposed by the portions of pipes that have already been welded.

Another object of the present invention is to provide a motorized vehicle provided with a welding apparatus which solves the above-mentioned drawbacks.

This aim and these and other objects, which will become better apparent hereinafter, are achieved by an apparatus for welding the ends of plastics pipes located on-site, of the type which comprises a supporting frame for a first clamp for locking the end of a first pipe to be welded and for a second clamp for locking the end of a second pipe to be welded to said first pipe, said second clamp being movable toward said first clamp by association with hydraulic means for translational motion, a heat-generating element for welding and a milling device for the ends of said first and second pipes being associable with said welding apparatus, said welding apparatus further comprising a control unit, said welding apparatus being characterized in that it comprises means for reversible fixing to a vehicle provided with at least one steerable wheel and provided with an auxiliary hydraulic system for associable work equipment, said reversible fixing means comprising hydraulic couplings for connecting said auxiliary hydraulic system to said hydraulic means for the translational motion of said second clamp and to a hydraulic motor which is connected to an electric generator for supplying power to said welding apparatus.

Advantageously, the device comprises means for moving said frame with respect to said vehicle, which allow its translational motion in the direction of travel of said second clamp and its oscillation about an axis which is parallel to the longitudinal vertical central plane of the part of said vehicle to which said welding apparatus is coupled.

Further characteristics and advantages of the invention will become better apparent from the following detailed description of a preferred but not exclusive embodiment thereof, illustrated by way of non-limiting example in the accompanying drawings, wherein:

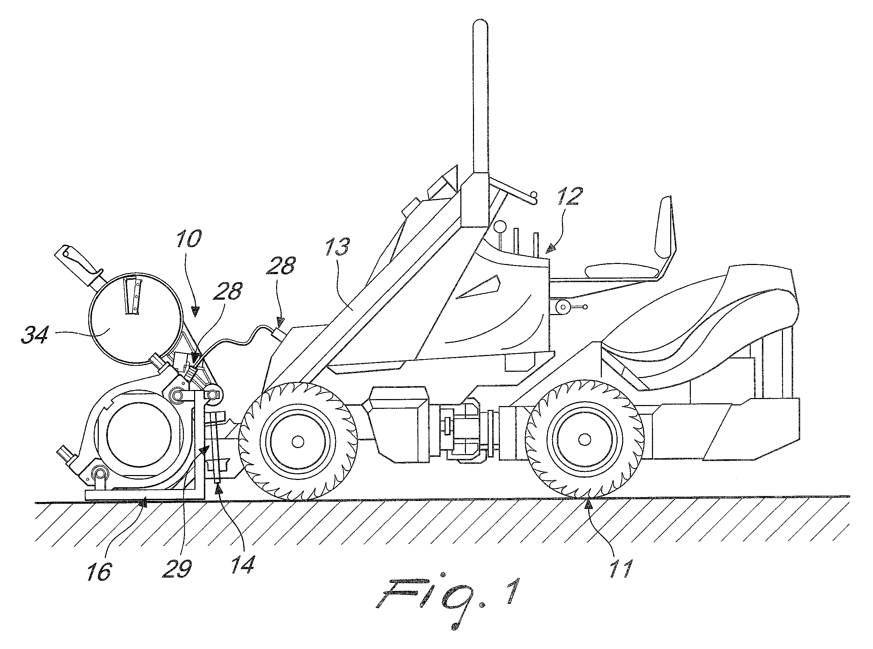

Figure 1 is a side view of a multifunctional vehicle to which a welding apparatus according to the invention is fixed;
Figure 2 is a top view of a multifunctional vehicle to which a welding apparatus according to the invention is fixed;
Figure 3 is a top view of a portion of the welding apparatus according to the invention;
Figure 4 is a side view of a multifunctional vehicle with a lifting arm at the end of which a welding apparatus according to the invention is fixed;

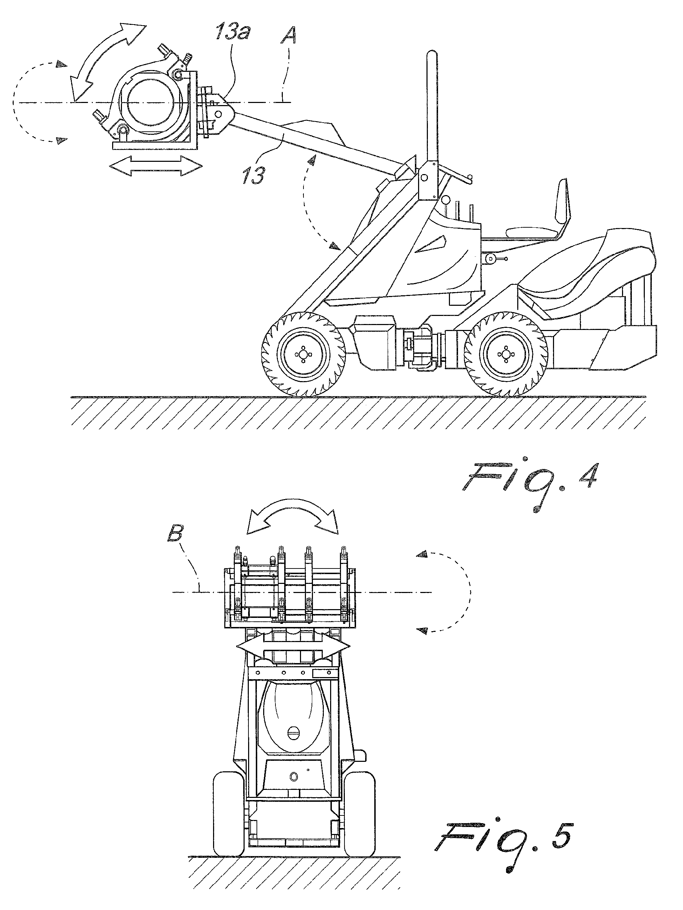

Figure 5 is a front view of a multifunctional vehicle with a lifting arm at the end of which a welding apparatus according to the invention is fixed;
Figure 6 is a diagram of the systems associated with the welding apparatus;
Figure 7 is a top view of a different embodiment of the welding apparatus fixed to a multifunctional vehicle.

With reference to the figures, a welding apparatus according to the invention is generally designated by the reference numeral 10.

The welding apparatus 10 is applied to a motorized vehicle 11, of the type with at least one steerable wheel, which is provided with a driving post 12 for the user, which is located on board the vehicle 11.

In particular, the motorized vehicle 11 has, in the embodiment described hereinafter, four steerable wheels, the vehicle being articulated centrally.

It is equivalently possible to use, for example, vehicles with four wheels, two or four of which are steerable, or vehicles with three wheels in which at least one wheel is steerable.

The motorized vehicle 11 is, for example, a so-called multifunctional machine to be used at a building site, which is provided with an auxiliary hydraulic system for supplying power to auxiliary work equipment which can be installed on said vehicle, such as for example buckets, vertical lifters, lawnmowers, drills, lifting arms, etc.

In this described embodiment, the motorized vehicle 11 is provided with a lifting device 13, to which the part of the welding apparatus 10 related to the locking of the ends of the pipes to be welded is rigidly coupled by way of reversible fixing means 14.

In particular, the lifting device 13 is constituted by a telescopic extensible arm, which is articulated to the front part of said vehicle and supports, at its free end, the part of the welding apparatus 10 related to the locking of the ends of the pipes to be welded.

Said arm can move substantially parallel to the longitudinal central plane of the vehicle 11.

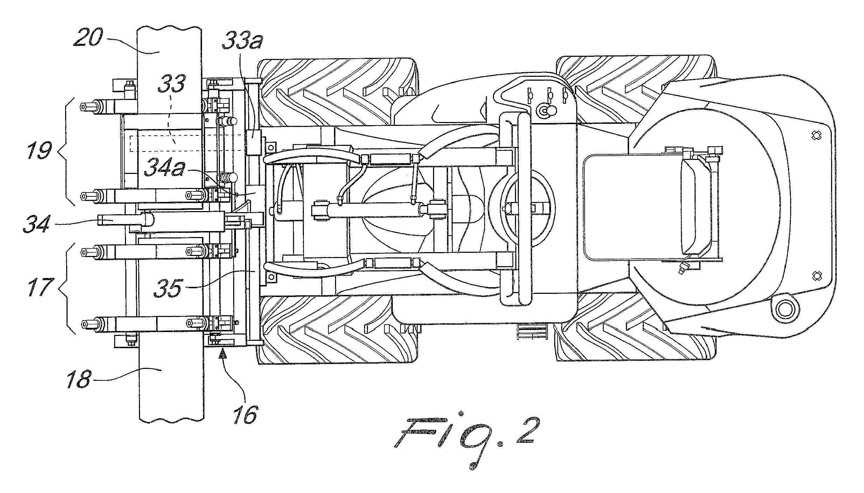

With reference to what has been described above, such part of the welding apparatus 10 related to the locking of the ends of the pipes to be welded comprises a supporting frame 16 for a first clamp 17 for locking the end of a first pipe 18 to be welded and for a second clamp 19 for locking the end of a second pipe 20 to be welded to the first pipe 18, as clearly visible in Figure 2.

In particular, in this embodiment both the first clamp 17 and the second clamp 19 are composed of two pairs of jaws, which are mutually rigidly coupled and spaced and are designated respectively by the reference numerals 17a and 19a.

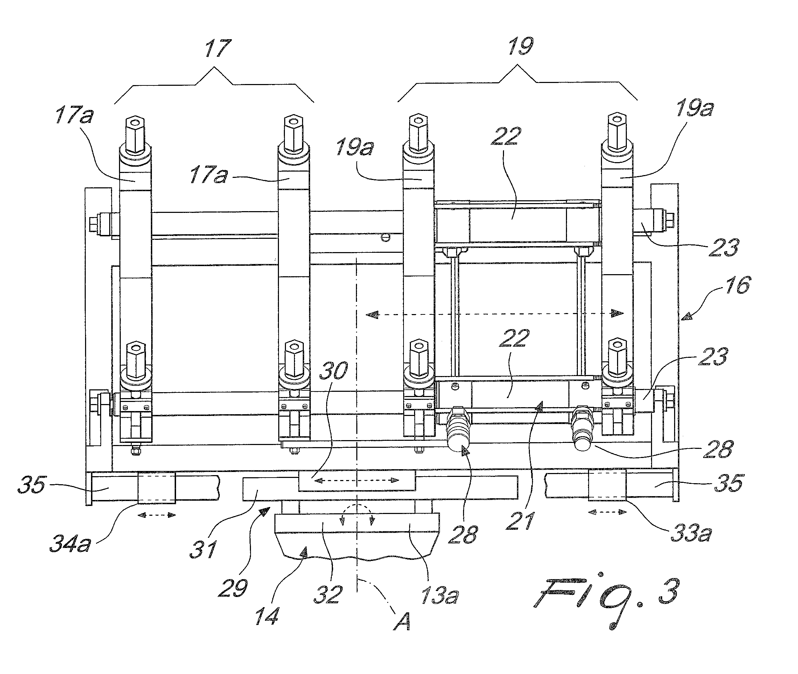

The second clamp 19 can move toward the first clamp 17 (as indicated by an arrow drawn in broken lines in Figure 3) by way of its association with hydraulic translational motion means 21, which comprise for example hydraulic cylinders 22, which are fixed to the frame 16 and to the second clamp 19; the clamp 19 is guided by guiding columns 23.

In particular, the frame 16 is fixed to the lifting device 13 so that the direction of translational motion of the second clamp 19 is substantially perpendicular to the longitudinal vertical central plane of at least the front portion of the vehicle 11, which corresponds substantially to the direction of rectilinear advancement of said vehicle.

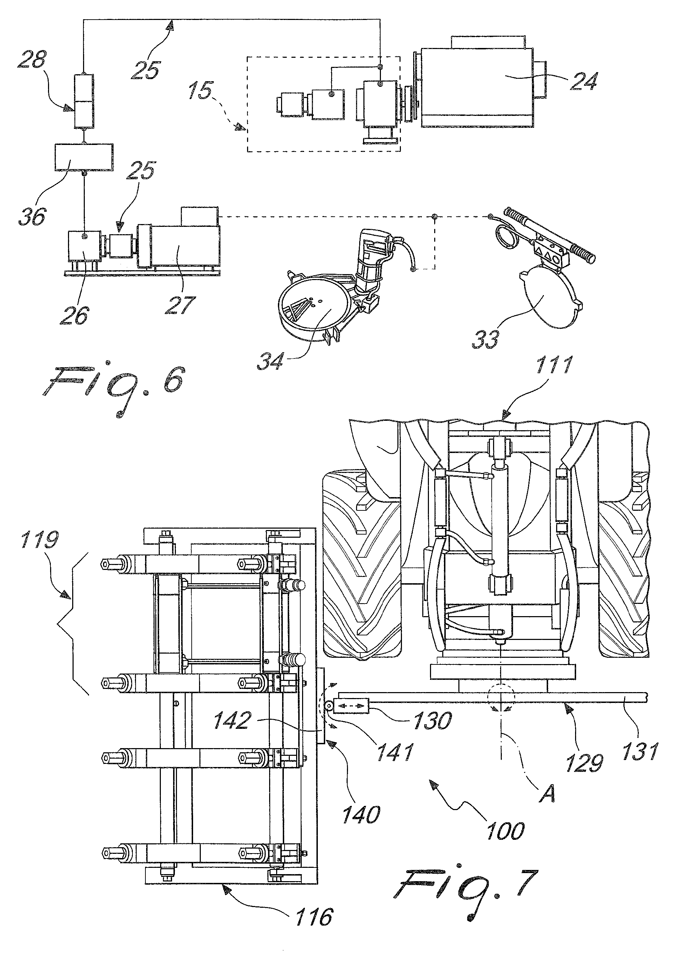

As shown schematically in Figure 6, the vehicle 11 comprises a main engine 24, of the diesel- or gasoline-fueled type, which is connected to a main hydraulic system connected to a hydraulic drive 15, which is associated with the hydraulic articulation mechanism for steering the vehicle and to other specific user devices which are linked to the movement of said vehicle.

An auxiliary hydraulic system 25 branches out from said main hydraulic system and is functionally connected to a hydraulic motor 26, which powers an electric current generator 27.

In this embodiment, the main hydraulic system also powers the lifting device 13.

In this embodiment, the hydraulic motor 26 and the electric current generator 27 are mounted on the vehicle 11, but in other equivalent embodiments said hydraulic motor and the electric current generator can be mounted on the frame 16.

The auxiliary hydraulic system 25 powers any work equipment associated with the vehicle 11.

In particular, in the described embodiment, the auxiliary hydraulic system 25 powers the hydraulic means 21 for the translational motion of the second clamp 19.

The means 14 for reversibly fixing the part of the welding apparatus 10 related to the locking of the ends of the pipes 18 and 20 to be welded, in practice the means for fixing the frame 16 to the lifting device 13, are therefore provided with hydraulic couplings 28 for connecting the auxiliary hydraulic system 25 to the hydraulic translational motion means 21.

Advantageously, the welding apparatus 10 further comprises means 29 for moving the frame 16 with respect to the vehicle 11, which allow a translational motion thereof in the direction of the motion of the second clamp 19 and an oscillation thereof about an axis, designated by the reference letter A, which is parallel to the vertical longitudinal central plane of the front part of the vehicle 11 (the part to which the welding apparatus is rigidly coupled); in practice, the axis A is perpendicular to said direction of movement of the second clamp 19.

Merely by way of example, the movement means 29 comprise a slider 30, which is rigidly coupled to the frame 16 and is arranged so that it can slide in a direction which is substantially parallel to the translational motion of the second clamp 19 on a first plate 31.

The movement of the slider 30 is ensured, for example, by a hydraulic actuator, not shown in the figures, which is connected between the slider 30 and the first plate 31.

The first plate 31 is hinged about the axis A, which is perpendicular to the direction of motion of the second clamp 19 (and therefore at right angles to the translational motion of the slider 30), to a second plate 32, which is fixed by way of the reversible fixing means 14 to the free end of the arm which constitutes the lifting device 13.

The rotation of the first plate 31 with respect to the second plate 32 occurs for example by means of a hydraulic actuator, not shown in the figures, which is connected eccentrically between said first plate and the second plate 32.

For fixing the second plate 32 to the lifting device 13, the reversible fixing means 13 are constituted by a coupling system of the substantially quick type.

In this embodiment, the free end of the extensible arm on which the second plate 32 is fixed is constituted by a head 13a, which can rotate by way of hydraulic actuators about an axis B, which is horizontal and perpendicular to the longitudinal axis of at least the part of the vehicle 11 to which the welding apparatus 10 is fixed (the front part of the vehicle).

The welding apparatus 10 also comprises a heat-generating element 33 (of a per se known type, shown schematically in broken lines in Figure 2 and also in the diagram of Figure 6 and connected electrically to the electric generator 27), which is adapted to melt the ends of the pipes to be welded, and a milling device 34, of a per se known type, which is adapted to make the end surfaces of said pipes to be welded flat and parallel.

Both the heat-generating element 33 and the milling device 34 are arranged so that they can slide on a bar 35 of the frame 16 which is arranged behind the clamps 17 and 19, parallel to the direction of motion of the second clamp 19.

In particular, in this embodiment the heat-generating element 33 and the milling device 34 comprise means (not shown in the figures) for engagement/release with respect to respective carriages 33a and 34a, which are arranged so that they can slide along the bar 35.

The welding apparatus 10 further comprises a control unit 36, for example of the electronic type (in an equivalent manner, it is possible to use other types of control unit, for example of the electrohydraulic type), which is provided with controls available to the operator.

For example, the control unit 36 is of the type disclosed in Italian patent application No. PD1999A000120.

The electronic control unit 36 can be preset by the operator as regards the working time, pressure and temperature parameters and has a data acquisition section provided with various sensors.

In this embodiment, the auxiliary hydraulic system 25 supplies power to the control unit 36, which is connected functionally to the hydraulic translational motion means 21.

In an alternative embodiment, shown in Figure 7, the welding apparatus, now generally designated by the reference numeral 100, comprises means 140 for transferring the frame 116 from a position in which the direction of translational motion of the second clamp 119 is substantially perpendicular to the longitudinal axis of at least the part of the vehicle 111 to which the welding apparatus is fixed, to a position in which said direction of translational motion of the second clamp 119 is parallel to the rectilinear motion that can be performed with the vehicle 111.

These transfer means 140 are associated with such movement means, now designated by the reference numeral 129, and comprise a hinge 141, whose axis is perpendicular to the oscillation axis A of the second plate 132 and to the direction of movement of the second clamp 119, and which is interposed between a third plate 142, which is fixed to the frame 116, and the slider 130, which slides on the first plate 131.

Additional hydraulic actuators (not shown in the figures) are associated with the third plate 142 in order to allow rotation about the axis of the hinge 141.

The first plate 131 is for example longer than the first illustrated embodiment and its ends reach outside the footprint of the wheels of the vehicle 111.

In this manner, the frame 116 can rotate, being arranged on the side of the vehicle, so that the second clamp 119 can move parallel to the longitudinal axis of the vehicle 111.

In practice it has been found that the invention thus described solves the problems noted in known types of welding apparatus; in particular, the present invention provides a welding apparatus which can be moved along the path of the pipes to be welded conveniently and quickly, in full safety for the operator assigned to its operation.

This has been achieved by providing a welding machine which can be fixed rapidly and quickly to a vehicle of the multifunctional type, utilizing not only its movement characteristics but also its power sources for operation.

This allows the operator to sit on the vehicle and move the apparatus along the pipes in full safety.

The use of steerable wheels increases the maneuverability of the vehicle and the possibilities of relative arrangement of the apparatus with respect to the pipes to be welded.

Moreover, the fact of using means for fixing the apparatus to the vehicle in combination with means for movement along particular directions for the frame allows to orient in a very flexible manner said apparatus with respect to the pipes, with an evident advantage in terms of operating speed and precision.

For example, if the welding apparatus is arranged so that the pipes to be welded lie transversely to the longitudinal axis of the vehicle, it is possible to move the frame in the direction of said pipes.

Moreover, it is possible to oscillate the frame about an axis which is parallel to the vertical longitudinal central plane of the part of said vehicle to which the welding apparatus is rigidly coupled (a horizontal axis in the figures), thus allowing convenient orientation of said clamp if the pipes are not perfectly horizontal and facilitating the steps for unloading the pipes, since the tilt of the apparatus is sufficient to make said pipes slide to the ground.

It is evident that the exemplary embodiments of the movement means 29 and 129 described here are merely non-limiting examples of the great variety of technical possibilities that can be used.

For example, the movement means 29 can be of a type other than hydraulic actuators, and can be for example of the electromechanical type.

Advantageously, the apparatus, thanks to the reversible fixing means, can be disconnected easily from the vehicle and can be used for example in the case of pipes arranged in a trench, where the vehicle cannot reach.

Moreover, the second described embodiment shows the possibility to arrange the frame so that it is laterally adjacent to the vehicle instead of lying in front of it, whenever it is necessary for the direction of advancement of the vehicle to be substantially parallel to the direction of movement of the second clamp of the welding apparatus and therefore parallel to the extension of the pipes.

Advantageously, a vehicle provided with a lifting device has been identified, making the possibility to move the welding apparatus even more flexible.

Moreover, said vehicle is provided with a head for fixing the frame to the extensible lifting arm which is pivoted to said arm about a horizontal axis and therefore allows an additional movement of the frame, for example a rotary motion toward the vehicle, thus shifting the center of gravity of the frame closer to the center of gravity of the vehicle, consequently increasing the stability of the entire system.

It should also be noted that the apparatus can be associated in convenient positions of the vehicle with which it is associated.

For example, it is possible to use as a vehicle a conventional tractor and connect the apparatus both to the front power take-offs and to the rear power take-offs, depending on requirements.

The apparatus is therefore arranged in front or behind the vehicle, according to requirements.

It should also be noted that the vehicle can also be designed specifically to carry the welding apparatus, and that said apparatus in principle can be fixed to any part of the vehicle, a front part, a rear part or another useful part.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2005A000124 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for welding the ends of plastics pipes located on-site, of the type which comprises a supporting frame (16, 116) for a first clamp (17) for locking the end of a first pipe (18) to be welded and for a second clamp (19, 119) for locking the end of a second pipe (20) to be welded to said first pipe (18), said second clamp (19, 119) being movable toward said first clamp (17) by association with hydraulic means (21) for translational motion, a heat-generating element (33) for welding and a milling device (34) for the ends of said first and second pipes (18, 20) being associable with said welding apparatus (10, 100), said welding apparatus (10, 100) further comprising a control unit (36) for controlling and managing its operation, **characterized in that** it comprises means (14) for reversible fixing to a vehicle (11, 111) provided with at least one steerable wheel and provided with an auxiliary hydraulic system (25) for associable work equipment, said reversible fixing means (14) comprising hydraulic couplings (28) for connecting said auxiliary hydraulic system (25) to said hydraulic means (21) for the translational motion of said second clamp (19, 119) and to a hydraulic motor (26) which is connected to an electric generator (27) for supplying power to said welding apparatus (10, 100).

2. The apparatus according to claim 1, **characterized in that** it comprises means (29, 129) for moving said frame (16, 116) with respect to said vehicle (11, 111), which are adapted to allow a translational motion thereof in the direction of motion of said second clamp (19, 119) and an oscillation about an axis (A) which is parallel to the vertical longitudinal central plane of the part of said vehicle (11, 111) to which said welding apparatus is coupled.

3. The apparatus according to claim 2, **characterized in that** said movement means (29, 129) are associated with actuators of the hydraulic type.

4. The apparatus according to one of the preceding claims, **characterized in that** said heat-generating element (33) for welding and said milling device (34) comprise means for engagement/disengagement with respect to said frame (16, 116).

5. The apparatus according to claim 4, **characterized in that** said heat-generating element (33) for welding and said milling device (34) are associated, by way of said engagement/disengagement means, with respective carriages (33a, 34a), which are arranged so that they can slide parallel to the direction of translational motion of said second clamp (19, 119) on a bar (35) of said frame (16).

6. A building site vehicle, of the type moved by motorized wheels, at least one of which is a steerable wheel, and provided with a driving post (12) for the user, which is arranged on board said vehicle (11, 111), comprising an auxiliary hydraulic system (25) which is functionally connected to a hydraulic motor (26) which supplies power to an electric current generator (27) for a welding apparatus (10, 100) which comprises a supporting frame (16, 116) for a first clamp (17) for locking the end of a first pipe (18) to be welded and for a second clamp (19, 119) for locking the end of a second pipe (20) to be welded to said first pipe (18), said second clamp (19, 119) being movable toward said first clamp (17) by association with hydraulic translational motion means (21), a heat-generating element (33) for welding and a milling device (34) for the ends of said first and second pipes (18, 20) being associable with said welding apparatus (10, 100), said welding apparatus (10, 100) further comprising a control unit (36), said auxiliary hydraulic system (25) being further functionally connected to said hydraulic means (21) for the translational motion of said second clamp (19, 119), means for moving said frame (16) with respect to said vehicle (11, 111) being further associated with said welding apparatus (10, 100), said means being adapted to allow translational motion in the direction of motion of said second clamp (19, 119) and an oscillation about an axis which is parallel to the vertical longitudinal central plane of the part of said vehicle (11, 111) to which said welding apparatus is coupled.

7. The building site vehicle according to claim 6, **characterized in that** it comprises a lifting device (13) to which said frame (16, 116) of said welding apparatus (10, 100) is rigidly coupled by way of said reversible fixing means (14).

8. The building site vehicle according to claim 7, **characterized in that** said lifting device (13) comprises an extensible arm, which is articulated on the front part of said vehicle (11, 111) and supports, at its free end, said welding apparatus (10, 100).

9. The building site vehicle according to claim 8, **characterized in that** the direction of translational motion of the second clamp (19, 119) of said welding apparatus (10, 100) is substantially perpendicular to the longitudinal central plane of at least the part of said vehicle to which said welding apparatus (10, 100) is fixed.

10. The building site vehicle according to one or more of claims 6 to 8, **characterized in that** it comprises means (140) for moving said frame (116) of said welding apparatus (100) from a position in which the direction of translational motion of the second clamp (119) of said welding apparatus (100) is substantially perpendicular to the longitudinal central plane of at least the part of said vehicle to which said welding apparatus (100) is fixed, to a position in which said direction of translational motion of the second clamp (119) is parallel to the rectilinear motion that can be performed with said entire vehicle.

11. The building site vehicle according to one of the preceding claims, **characterized in that** said movement means (29, 129) are associated with actuators of the hydraulic type.

12. The building site vehicle according to one of the preceding claims, **characterized in that** said heat-generating element (33) for welding and said milling device (34) comprise means for engagement/disengagement with respect to said frame (16, 116).

13. The building site vehicle according to claim 12, **characterized in that** said heat-generating element (33) for welding and said milling device (34) are associated, by way of said engagement/disengagement means, with respective carriages (33a, 34a), which are arranged so that they can slide, parallel to the direction of translational motion of said second clamp (19, 119), on a bar (35) of said frame (16).
